Europäisches Patentamt

European Patent Office

Office européen des brevets

(19)

(11) Veröffentlichungsnummer: **0 457 154 B1**

## (12) EUROPÄISCHE PATENTSCHRIFT

(45) Veröffentlichungstag der Patentschrift :
**09.03.94 Patentblatt 94/10**

(51) Int. Cl.$^5$: **B01J 13/18**, B41M 5/165

(21) Anmeldenummer : **91107345.0**

(22) Anmeldetag : **07.05.91**

(54) **Mikrokapseln.**

Die Akte enthält technische Angaben, die nach dem Eingang der Anmeldung eingereicht wurden und die nicht in dieser Patentschrift enthalten sind.

(30) Priorität : **16.05.90 DE 4015753**

(43) Veröffentlichungstag der Anmeldung :
**21.11.91 Patentblatt 91/47**

(45) Bekanntmachung des Hinweises auf die Patenterteilung :
**09.03.94 Patentblatt 94/10**

(84) Benannte Vertragsstaaten :
**AT BE CH DE DK ES FR GB IT LI NL SE**

(56) Entgegenhaltungen :
**EP-A- 0 198 089**
**DE-A- 2 920 846**
**FR-A- 2 238 477**
**US-A- 3 666 680**
**US-A- 4 097 404**
**PATENT ABSTRACTS OF JAPAN, Band 4, Nr. 138 (P-29)[620], 27. September 1980; & JP-A-55 89 855 (CANON K.K.) 07-07-1980**

(73) Patentinhaber : **BASF Aktiengesellschaft**
**Carl-Bosch-Strasse 38**
**D-67063 Ludwigshafen (DE)**

(72) Erfinder : **Jahns, Ekkehard**
**G.-Nadler-Strasse 1**
**W-6945 Hirschberg (DE)**
Erfinder : **Freundschuh, Ulrich**
**Traubenweg 13**
**W-6900 Heidelberg (DE)**

## Beschreibung

Die vorliegende Erfindung betrifft Mikrokapseln, erhältlich durch Polymerisation von

A) 30 bis 100 Gew.-%, bezogen auf das Gesamtgewicht der Monomeren, eines oder mehrerer $C_1$-$C_{24}$-Alkylester der Acryl- und/oder Methacrylsäure (Monomere I),

B) 0 bis 80 Gew.-%, bezogen auf das Gesamtgewicht der Monomeren, eines bi- oder polyfunktionellen Monomeren (Monomere II), welches in Lösungsmitteln löslich ist, die in Wasser nicht löslich oder schwerlöslich sind und

C) 0 bis 40 Gew.-%, bezogen auf das Gesamtgewicht der Monomeren, sonstiger Monomerer (Monomere III),

wobei das Lösungsmittel gegebenenfalls zusammen mit den Monomeren und einem Radikalstarter als disperse Phase einer stabilen Öl-in-Wasser-Emulsion vorliegt, und wobei die Polymerisation stufenweise durch Erhöhung der Temperatur durch den thermischen Zerfall des Radikalstarters ausgelöst und gesteuert wird.

Außerdem betrifft die Erfindung ein Verfahren zur Herstellung der Mikrokapseln, die Verwendung Farbbildner enthaltender Mikrokapseln zur Herstellung von druckempfindlichen Aufzeichnungsmaterialien sowie diese Aufzeichnungsmaterialien.

Aus den EP-A 026 914, EP-A 133 295 und EP-A 218 887 sind Mikrokapseln auf der Basis von Melamin-Formaldehyd-Harzen bekannt, die für druckempfindliche Aufzeichnungsmaterialien empfohlen werden.

Eine weitere Methode zur Herstellung von Mikrokapseln ist die sogenannte in-situ-Polymerisation. Man stellt die Mikrokapseln z.B. nach der EP-A 198 089 in der Weise her, daß man aus Monomeren wie Acrylsäureestern, einem wasserunlöslichen Lösungsmittel, einem Radikalstarter, einem Polymeren und dem einzukapselnden Stoff zunächst eine Lösung herstellt und diese dann in eine stabile Öl-in-Wasser-Emulsion überführt. Danach löst man die Polymerisation der Monomeren durch Temperaturerhöhung aus, wobei die entstehenden Polymeren die Wandungen der Kapseln bilden, welche die verbleibende organische Lösung des einzukapselnden Stoffes fest umschließen.

Als einzukapselnde Stoffe werden in diesem Zusammenhang Farbstoffe, Detergentien, Druckfarben, Parfüme, Klebstoffe, Medizin, landwirtschaftliche Chemikalien, Düngemittel, Fette, Öle, Nahrungsmittel, Enzyme, Flüssigkristalle, Farben, Rostschutzmittel, Aufzeichnungsmaterialien, Katalysatoren, chemische Reaktanden und magnetische Substanzen erwähnt.

Die erfindungsgemäßen Mikrokapseln werden aus 30 bis 100 Gew.-%, vorzugsweise 30 bis 95 Gew.-% eines oder mehrerer $C_1$-$C_{24}$-Alkylester der Acryl- und/oder Methacrylsäure als Monomere I hergestellt.

Außerdem können die erfindungsgemäßen Mikrokapseln aus bis zu 80 Gew.-%, vorzugsweise aus 5 bis 40 Gew.-% eines bi- oder polyfunktionellen Monomeren als Monomere II, welches in Lösungsmitteln löslich ist, die in Wasser nicht löslich oder schwerlöslich sind und aus bis zu 40 Gew.-%, vorzugsweise bis zu 30 Gew.-% sonstigen Monomeren III mitaufgebaut sein.

Als Monomere I eignen sich $C_1$-$C_{24}$-Alkylester der Acryl- und/oder Methacrylsäure. Besonders bevorzugte Monomere I sind Methyl-, Ethyl-, n-Propyl-, n-Butyl und 2-Ethylhexylacrylat und/oder -methacrylat. Bevorzugt sind iso-Propyl-, iso-Butyl-, sec.-Butyl und tert.-Butylacrylat und -methacrylat. Daneben sind n-Pentyl-, n-Hexyl-, n-Heptyl-, n-Octyl und Laurylacrylat und -methacrylat zu nennen.

Als zusätzliche Monomere II kommen bi- oder polyfunktionelle Monomere, welche in Lösungsmitteln löslich sind, die in Wasser nicht löslich oder schwerlöslich sind, in Betracht, vornehmlich Divinyl- und Polyvinylmonomere, die eine Vernetzung der Kapselwand während der Polymerisation bewirken.

Bevorzugte Divinylmonomere sind Ethandioldiacrylat, Divinylbenzol, Ethylenglykoldimethacrylat, 1,3-Butylenglykoldimethacrylat, Methallylmethacrylamid und Allylmethacrylat. Besonders bevorzugt sind Propandiol-, Butan-, Pentan- und Hexandioldiacrylat oder -methacrylat.

Bevorzugte Polyvinylmonomere sind Trimethylolpropantriacrylat und -methacrylat, Pentaerythrittriallylether und Pentaerythrittetraacrylat.

Man kann die Vernetzung auch über additionsfähige oder kondensationsfähige Gruppen, gegebenenfalls zusammen mit weiteren mindestens bifunktionellen additionsfähigen oder kondensationsfähigen Gruppen bewirken, wobei man die Vernetzungsreaktion im Anschluß an die Polymerisation vornimmt.

Monomere mit derartigen Gruppen sind z.B. Glycidylacrylat und -methacrylat sowie besonders Vinylverbindungen, die Amino-, Acetylaceton-, Epoxy- oder Methylolgruppen enthalten.

Die funktionellen Gruppen dieser Monomeren können beispielsweise über bi- oder mehrfunktionelle Epoxide, Amine und Alkohole, vorzugsweise über Harnstoff- und Melamin-Formaldehyd-Vorkondensate vernetzt werden.

Besonders gute Ergebnisse bei der nachträglichen Vernetzung erzielt man bei Verwendung von Acetoacetoxyethylmethacrylat als funktionellem Monomeren und Formaldehyd oder Glutaraldehyd als vernetzender Komponente.

Als Monomere III kommen sonstige Monomere in Betracht, bevorzugt Styrol, α-Methylstyrol, β-Methylstyrol, Butadien, Isopren, Vinylacetat, Vinylpropionat und Vinylpyridin.

Besonders bevorzugte Monomere III sind Acrylnitril, Methacrylamid, Acrylsäure, Methacrylsäure, Itaconsäure, Maleinsäure, Maleinsäureanhydrid, N-Vinylpyrrolidon, 2-Hydroxyethylmethacrylat und Acrylamido-2-methylpropansulfonsäure.

Daneben sind N-Methylolacrylamid, N-Methylolmethacrylamid, Dimethylaminoethylmethacrylat und Diethylaminoethylmethacrylat zu nennen.

Die erfindungsgemäßen Mikrokapseln werden durch Polymerisation der Monomeren I, II und III hergestellt, wobei die Polymerisation durch Temperaturerhöhung bis zum Zerfall des Radikalstarters ausgelöst und gesteuert wird.

Als Radikalstarter für die radikalisch ablaufende Polymerisationsreaktion können die üblichen Peroxo- und Azoverbindungen, zweckmäßigerweise in Mengen von 0,2 bis 5 Gew.-%, bezogen auf das Gewicht der Monomeren, eingesetzt werden.

Als bevorzugte Radikalstarter sind tert.-Butylperoxyneodecanoat, tert.-Amylperoxypivalat, Dilaurylperoxid, tert.-Amylperoxy-2-ethylhexanoat, 2,2'-Azobis-(2,4-dimethyl)valeronitril, 2,2'-Azobis-(2-methylbutyronitril), Dibenzoylperoxid, tert.-Butylper-2-ethylhexanoat, Di-tert.-butylperoxid, tert.-Butylhydroperoxid, 2,5-Dimethyl-2,5-di-(tert.-butylperoxy)hexan und Cumolhydroperoxid zu nennen.

Besonders bevorzugte Radikalstarter sind Di-(3,5,5-trimethylhexanoyl)-per- oxid, 4,4'-Azobisisobutyronitril, tert.-Butylperpivalat und Dimethyl-2,2-azobisisobutyrat. Diese weisen eine Halbwertszeit von 10 Stunden in einem Temperaturbereich von 30 bis 100°C auf.

Die Monomeren und der Radikalstarter können in einem in Wasser nicht löslichen oder schwerlöslichen Lösungsmittel gelöst sein, welches als disperse Phase einer stabilen Öl-in-Waser Emulsion vorliegt. Man kann aber auch zunächst das Lösungsmittel dispergieren und zur Dispersion die Monomeren und den Radikalstarter zugeben. Weiterhin kann man auch Lösungsmittel + Monomere dispergieren und nur noch den Radikalstarter danach zugeben. Das Lösungsmittel enthält dabei natürlich noch gegebenenfalls vorhandene Inhaltstoffe, z.B. Farbbildner.

Als in Wasser nicht lösliche oder schwerlösliche Lösungsmittel kommen natürliche Öle, synthetische Öle und Lösungsmittel mit Siedepunkten im Bereich von 80 bis 350°C, vorzugsweise von 150 bis 350°C in Betracht. Der Anteil der Ölphase in der Öl-in-Wasser-Emulsion liegt vorzugsweise bei 20 bis 60 Gew.-%.

Bevorzugte in Wasser nicht lösliche oder schwerlösliche Lösungsmittel sind Benzine, Mineralöle, Paraffine, Chlorparaffine, Fluorkohlenwasserstoffe, Erdnußöl, Sojaöl, chlorierte Diphenyle, Tributylphosphat, Dibutylmaleat, o-Dichlorbenzol, Benzylalkohol, Diisopropylnaphthalin und 1-Phenyl-1-xylylethan.

Besonders hohe Löslichkeiten der Inhaltsstoffe, z.B. Farbbildner, in den in Wasser nicht löslichen oder schwerlöslichen Lösungsmitteln erzielt man in solchen Lösungsmitteln, deren Siedepunkte im Bereich von 150 bis 350°C liegen, z.B. in Dibutylphthalat, Diisoheptylphthalat, Dioctylphthalat, Alkylnaphthalinen und partiell hydrierten Terphenylen sowie vor allem in Diisopropylnaphthalin, Dodecylbenzol und in Mischungen dieser Lösungsmittel.

Als Inhaltsstoffe für die Kapseln kommen insbesondere die auf den Seiten 1, 2 genannten Stoffe in Betracht, wobei Farbbildner bevorzugt sind.

Als einzukapselnde Farbbildner eignen sich z.B. farblose oder nur schwach gefärbte Verbindungen, die sich unter dem Einfluß von Säuren in Farbstoffe umwandeln, wie es beispielsweise für zahlreiche Phthalide zutrifft, die unter öffnung des Lactonringes in gefärbte offenkettige Säuren übergehen.

Bevorzugte Farbbildner sind 3,3-Bis-(p-dimethylaminophenyl)-phthalid, 3-(p-Dimethylaminophenyl)-3-(1,2-dimethylindol-3-yl)-phthalid, 3-(p-Dimethylaminophenyl)-3-(2-phenylindol-3-yl)-phthalid, Rhodamin-B-anilinolactam, 3-Dimethylamino-7-methoxyfluoran, p-Nitrobenzoyl-Leukomethylenblau, 3-Methyl-spirodinaphthopyran und 3-Propylspirodibenzpyran.

Besonders bevorzugt sind 3,3-Bis-(p-dimethylaminophenyl)-6-dimethylaminophthalid und N-Benzoyl-Leukomethylenblau sowie deren Mischungen.

Im allgemeinen werden die Farbbildner in Mengen von 1 bis 10 Gew.-%, vorzugsweise von 2 bis 8 Gew.-% eingesetzt, bezogen auf die Ölphase der Emulsion.

Als saure Farbentwickler eignen sich saurer Ton, Attapulgit, Aluminiumsilikat, Benzoesäure, Chlorbenzoesäure, Toluylsäure, Salicylsäure und 4-tert.-Butylsalicylsäure sowie besonders Kaolin und alkylsubstituierte Phenole.

Man kann die erfindungsgemäßen Mikrokapseln in an sich bekannter Weise herstellen, z.B. nach den in der EP-A 198 089 beschriebenen Methoden.

In der Regel führt man die Polymerisation bei 20 bis 100°C, vorzugsweise bei 40 bis 80°C durch.

Zweckmäßigerweise wird die Polymerisation bei Normaldruck vorgenommen, jedoch kann man auch bei vermindertem oder leicht erhöhtem Druck arbeiten, also etwa im Bereich von 0,5 bis 5 bar.

EP 0 457 154 B1

Die Reaktionszeiten betragen normalerweise 1 bis 10, meistens 2 bis 7 Stunden.

Verfahrenstechnisch geht man in der Regel so vor, daß man eine Mischung aus Wasser, Schutzkolloiden, ionischen Emulgatoren, in Wasser nicht löslichen oder schwerlöslichen Lösungsmitteln, darin gelösten Inhaltsstoffen, Radikalstartern und Monomeren nacheinander oder gleichzeitig dispergiert und unter intensivem Rühren auf die Zerfallstemperatur der Radikalstarter erhitzt.

Die Geschwindigkeit der Polymerisation kann dabei durch die Wahl der Temperatur und die Menge des Radikalstarters gesteuert werden.

Nach Erreichen der Reaktionstemperatur setzt man die Polymerisation zweckmäßigerweise noch etwa für eine Zeit von 2 bis 6 Stunden fort, um Restmonomerengehalte abzusenken.

Bevorzugte Emulgatoren sind wasserlösliche Polymere, da diese die Oberflächenspannung des Wassers von 73 mN/m maximal auf 45 bis 70 mN/m senken und somit die Ausbildung geschlossener Kapselwände gewährleisten sowie Mikrokapseln mit Teilchengrößen zwischen 1 und 30 µm, vorzugsweise 3 und 12 µm ausbilden.

Besonders bevorzugte Schutzkolloide sind Cellulosederivate wie Hydroxyethylcellulose, Carboxymethylcellulose und Methylcellulose, Polyvinylpyrrolidon und Copolymere des Vinylpyrrolidons.

Bevorzugt sind Gelatine, Gummiarabicum, Xanthan, Natriummalginat, Kasein, Polyvinylalkohol und partiell hydrolisierte Polyvinylacetate.

Im allgemeinen werden die Schutzkolloide in Mengen von 0,1 bis 10 Gew.-%, vorzugsweise von 0,5 bis 5 Gew.-%, eingesetzt, bezogen auf die Wasserphase der Emulsion.

Zur Verbesserung der Stabilität der Emulsionen können ionische Emulgatoren zugesetzt werden. Besonders wichtig ist die Mitverwendung ionischer Emulgatoren bei einem großen Gehalt an Mikrokapseln in der Dispersion, da es ohne einen zusätzlichen ionischen Stabilisator zur Bildung von agglomerierten Mikrokapseln kommen kann. Diese Agglomerate senken die Ausbeute an nutzbaren Mikrokapseln, wenn es sich um Agglomerate kleiner Kapseln von 1 bis 3 µm Durchmesser handelt, und sie erhöhen die Reibempfindlichkeit, wenn die Agglomerate größer als etwa 10 µm sind.

Als ionische Emulgatoren eignen sich besonders Polymethacrylsäure, die Polymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure.

Bevorzugte ionische Emulgatoren sind Naphthalinsulfonsäure und Naphthalinsulfonsäure-Formaldheyd-Kondensate sowie vor allem Polyacrylsäuren und Phenolsulfonsäure-Formaldehyd-Kondensate.

Die ionischen Emulgatoren werden in der Regel in Mengen von 0,1 bis 10 Gew.-% eingesetzt, bezogen auf die Wasserphase der Emulsion.

Vorzugsweise wählt man die Polymerisationsbedingungen in an sich bekannter Weise so, daß die Mikrokapseln Durchmesser von 1 bis 35 µm, besonders 3 bis 15 µm haben.

Die Viskositäten der Kapseldispersionen werden als Auslaufzeiten in Sekunden von 100 ml Dispersion aus dem Ford-Becher mit 4 mm Bohrung nach DIN 53 211 gemessen.

Die Dispersionen der erfindungsgemäßen Mikrokapseln haben Feststoffgehalte von vorzugsweise 20 bis 60 Gew.-%.

Die erfindungsgemäßen Farbbildner enthaltenden Mikrokapseln dienen zur Herstellung von druckempfindlichen Aufzeichnungsmaterialien.

Hierbei handelt es sich in erster Linie um Durchschreibepapiere, die mit dem Farbentwickler imprägniert und mit einer Dispersion der Mikrokapseln beschichtet sind. Unter dem Druck des Schreibegerätes platzen die Mikrokapseln auf, so daß sich aus den Farbbildnern nach dem Entwickeln der Farbstoff bildet.

Man kann die erfindungsgemäß erhältlichen Dispersionen der Mikrokapseln unmittelbar zur Papierbeschichtung verwenden oder man kann sie, z.B. durch Sprühtrocknung, trocknen und vor ihrer Verwendung wieder redispergieren.

Beispiele

Herstellung von Farbbildner enthaltenden Mikrokapseln

Beispiel 1

Eine Mischung aus
1280 g Wasser
20 g Polyvinylpyrrolidon vom K-Wert 90
15 g Phenolsulfonsäure-Formaldehyd-Kondensat
522 g Diisopropylnaphthalin

4

522 g Dodecylbenzol
48 g einer Mischung aus
      36 g 3,3-Bis-(p-dimethylaminophenyl)-6-dimethylaminophthalid und
      12 g N-Benzoylleukomethylenblau
168 g Methylmethacrylat
19 g Butandioldiacrylat
1,4 g Azobisisobutyronitril
2 g Dimethyl-2,2-azobisisobutyrat

wurde bei Raumtemperatur für die Dauer von 20 Minuten dispergiert. Anschließend wurde unter andauernder Dispergierung auf 60°C erhitzt und 1 1/2 Stunden bei dieser Temperatur gehalten. Danach wurde auf 65°C erhitzt, 4 Stunden nachpolymerisiert und dann abgekühlt.

Der Feststoffgehalt der erhaltenen Dispersion betrug 49,1 Gew.-%, die Auslaufzeit aus dem Ford-Becher 101 Sekunden.

Die mittlere Teilchengröße der Mikrokapseln betrug bei einer praktischen Streubreite von 3 bis 7 μm 5,6 μm.

Beispiel 2

Diese Dispersion wurde analog Beispiel 1 aus den folgenden Komponenten hergestellt:
1287 g Wasser
20 g Polyvinylpyrrolidon vom K-Wert 90
18 g Phenolsulfonsäure-Formaldehyd-Kondensat
732 g Diisopropylnaphthalin
314 g einer hochsiedenen aliphatischen Kohlenwasserstoffmischung (Sdpkt. 230-265°C)
48 g einer Mischung aus
      36 g 3,3-Bis-(p-dimethylaminophenyl)-6-dimethylaminophthalid und
      12 g N-Benzoylleukomethylenblau
131 g Methylmethacrylat
56 g Butandioldiacrylat
1,4 g Azobisisobutyronitril
2 g Dimethyl-2,2-azobisisobutyrat.

Der Feststoffgehalt der erhaltenen Dispersion betrug 48,5 Gew.-%, die Auslaufzeit aus dem Ford-Becher 135 Sekunden.

Die mittlere Teilchengröße der Mikrokapseln betrug bei einer praktischen Streubreite von 3 bis 7 μm 5,4 μm.

Beispiel 3

Diese Dispersion wurde analog Beispiel 1 aus den folgenden Komponenten hergestellt:
1280 g Wasser
20 g Polyvinylpyrrolidon vom K-Wert 90
15 g Phenolsulfonsäure-Formaldehyd-Kondensat
732 g Diisopropylnaphthalin
314 g einer hochsiedenen aliphatischen Kohlenwasserstoffmischung (Sdpkt. 230-265°C)
48 g einer Mischung aus
      36 g 3,3-Bis-(p-dimethylaminophenyl)-6-dimethylaminophthalid und
      12 g N-Benzoylleukomethylenblau
93,5 g Methylmethacrylat
37,4 g n-Butylacrylat
1,4 g Azobisisobutyonitril
2 g Dimethyl-2,2-azobisisobutyrat.

Der Feststoffgehalt der erhaltenen Dispersion betrug 48,6 Gew.-%, die Auslaufzeit aus dem Ford-Becher 103 Sekunden.

Die mittlere Teilchengröße der Mikrokapseln betrug bei einer praktischen Streubreite von 3 bis 8 μm 5,8 μm.

Beispiel 4

Diese Dispersion wurde analog Beispiel 1 aus den folgenden Komponenten hergestellt:

1270 g Wasser

15 g Polyvinylpyrrolidon vom K-Wert 90

15 g Phenolsulfonsäure-Formaldehyd-Kondensat

636 g Diisopropylnaphthalin

273 g einer hochsiedenen aliphatischen Kohlenwasserstoffmischung (Sdpkt. 230-265°C)

48 g einer Mischung aus

    36 g 3,3-Bis-(p-dimethylaminophenyl)-6-dimethylaminophthalid und

    12 g N-Benzoylleukomethylenblau

287 g Methylmethacrylat

33 g Acetoacetoxyethylmethacrylat

5,5 g Azobisisobutyronitril

2 g Dimethyl-2,2-azobisisobutyrat.

Nach 1 1/2 stündigem Polymerisieren bei 60°C wurde jedoch eine Lösung aus 4,7 g Formaldehyd in 28 g Wasser im Laufe von 1 Stunde zugegeben, anschließend auf 65°C erhitzt und 1 1/2 Stunden bei dieser Temperatur gehalten.

Der Feststoffgehalt der erhaltenen Dispersion betrug 48,2 Gew.-%, die Auslaufzeit aus dem Ford-Becher 74 Sekunden.

Die mittlere Teilchengröße der Mikrokapseln betrug bei einer praktischen Streubreite von 3 bis 8 μm 5,5 μm.

Beispiel 5

Diese Dispersion wurde analog Beispiel 1 aus den folgenden Komponenten hergestellt:

1280 g Wasser

20 g Polyvinylpyrrolidon vom K-Wert 90

15 g Phenolsulfonsäure-Formaldehyd-Kondensat

522 g Diisopropylnaphthalin

522 g Dodecylbenzol

48 g einer Mischung aus

    36 g 3,3-Bis-(p-dimethylaminophenyl)-6-dimethylaminophthalid und

    12 g N-Benzoylleukomethylenblau

19 g Ethylacrylat

9 g Ethylmethacrylat

19 g 2-Ethylhexylacrylat

112 g Methylmethacrylat

28 g Divinylbenzol

1,4 g Azobisisobutyronitril

2 g Dimethyl-2,2-azobisisobutyrat.

Der Feststoffgehalt der erhaltenen Dispersion betrug 43,5 Gew.-%, die Auslaufzeit aus dem Ford-Becher 106 Sekunden.

Die mittlere Teilchengröße der Mikrokapseln betrug bei einer praktischen Streubreite von 3 bis 12 μm 5,8 μm.

Beispiel 6

Diese Dispersion wurde analog Beispiel 1 aus den folgenden Komponenten hergestellt:

1464 g Wasser

50 g Polyvinylpyrrolidon vom K-Wert 90

10 g Polyacrylsäure vom K-Wert 50

645 g Diisopropylnaphthalin

285 g einer hochsiedenden aliphatischen Kohlenwasserstoffmischung (Sdpkt.: 230-265°C)

50 g einer Mischung aus

    35,5 g 3,3-Bis-(p-dimethylaminophenyl)-6-dimethylaminophthalid und

    12,5 g N-Benzoylleukomethylenblau

120 g Methylmethacrylat

2 g Azobisisobutyronitril

30 g einer 20 %igen nichtwäßrigen Dispersion eines Methacrylatcopolymeren in Cyclohexan (4,8 % Methacrylsäuregehalt).

Nach dem Erhitzen auf 65°C wurde jedoch zunächst 2 1/2 Stunden bei dieser Temperatur und anschließend 2 1/4 Stunden bei 70°C polymerisiert.

Der Feststoffgehalt der erhaltenen Dispersion betrug 41,6 Gew.-%, die Auslaufzeit aus dem Ford-Becher 50 Sekunden.

Die mittlere Teilchengröße der Mikrokapseln betrug bei einer praktischen Streubreite von 2 bis 6 µm 5,2 µm.

Beispiel 7

Diese Dispersion wurde analog Beispiel 6 aus den folgenden Komponenten hergestellt:

1334 g Wasser

45 g Polyvinylpyrrolidon vom K-Wert 90

11 g Polyacrylsäure vom K-Wert 50

732 g Diisopropylnaphthalin

313 g einer hochsiedenden aliphatischen Kohlenwasserstoffmischung (Sdpkt.: 230-265°C)

55 g einer Mischung aus

41 g 3,3-Bis-(p-dimethylaminophenyl)-6-dimethylaminophthalid und

14 g N-Benzoylleukomethylenblau

187 g Methylmethacrylat

3,1 g Azobisisobutyronitril

45 g einer 20 %igen nichtwäßrigen Dispersion eines Methacrylatcopolymeren in Cyclohexan (4,8 % Methacrylsäuregehalt).

Der Feststoffgehalt der erhaltenen Dispersion betrug 47 Gew.-%, die Auslaufzeit aus dem Ford-Becher 106 Sekunden.

Die mittlere Teilchengröße der Mikrokapseln betrug bei einer praktischen Streubreite von 3 bis 6 µm 5,4 µm.

Anwendungstechnische Eigenschaften

Als anwendungstechnische Eigenschaften der erfindungsgemäßen Mikrokapseln wurden die Dichtigkeit, Farbintensität und Reibempfindlichkeit ermittelt.

Hierzu wurden die Mikrokapseldispersionen auf einen Feststoffgehalt von 16,5 Gew.-% verdünnt und anschließend mit einer Auftragsmenge von 5 g Mikrokapseln pro m²

α) auf normales Schreibmaschinenpapier und

β) auf Schreibmaschinenpapier, welches mit Attapulgit als Farbentwickler vorbehandelt war,

gestrichen, wonach diese Papiere getrocknet wurden.

A) Bestimmung der Dichtigkeit

Die Dichtigkeit ist ein Maß für die Menge an nichteingekapselten Farbbildnern.

Zur Bestimmung der Dichtigkeit wurde Papier β) mit Dodecylbenzol leicht angefeuchtet, wobei der nichteingekapselte Farbbildner gelöst wurde und mit dem Entwickler den Farbstoff bildete. Die Färbung der so behandelten Papiere wurde als Differenz der Reflexion eines nicht besprühten Blattes b) und des besprühten Blattes in einem Reflexionsphotometer gemessen und in relativen Einheiten in % angegeben, wobei die Reflexion des nicht besprühten Blattes b) gleich 100 gesetzt wurde.

B) Bestimmung der Farbintensität

Als Farbintensität wird die Intensität einer bestimmten Durchschrift bezeichnet.

Zur Bestimmung der Farbintensität wurde Papier α) mit der beschichteten Seite auf ein Papier gelegt, welches mit Farbentwickler beschichtet war und darüber wurden nochmals 3 Lagen Papier von 38 g/m² angeordnet. Dieser Stapel wurde in eine elektrische Schreibmaschine eingespannt und mit der größten Anschlagstärke ein Feld von 4,2 x 3,4 cm mit einem Buchstaben beschrieben. Die Intensität der vierten Durchschrift wurde als Differenz der Reflexion des unbeschriebenen und des beschriebenen Papiers in einem Reflexionsphotometer gemessen und in relativen Einheiten in % angegeben, wobei die Reflexion des unbeschriebenen Blattes gleich 100 gesetzt wurde.

C) Bestimmung der Reibempfindlichkeit

Der Reibwert ist ein Maß für die ausschließlich durch Reibung entstehende Färbung.

Zur Bestimmung des Reibwertes wurde ein Papier a) auf ein mit Farbentwickler beschichtetes Papier gelegt und das Papier a) zusammen mit einem aufgelegten kreisrunden, flachen Gewicht von 2,1 N/cm² gleichmäßig und langsam über das untenliegende entwicklungsbeschichtete Papier gezogen.

Anschließend wurde das entwicklerbeschichtete Papier für die Dauer von 1 Stunde im Dunkeln gelagert, wonach die Färbung als Differenz der Reflexion des nicht geriebenen Blattes und des geriebenen Blattes in einem Reflexionsphotometer gemessen und in relativen Einheiten in % angegeben wurde, wobei die Reflexion des nicht geriebenen Blattes gleich 100 gesetzt wurde.

Die Tabelle zeigt die Ergebnisse der Prüfungen A, B und C.

Tabelle

Anwendungstechnische Eigenschaften der Mikrokapseln gemäß den Beispielen 1 bis 5

| Beispiel | Dichtigkeit (%) | Farbintensität (%) | Reibwert (%) |
|---|---|---|---|
| 1 | 43 | 29,8 | 23,7 |
| 2 | 7 | 38,8 | 15,5 |
| 3 | 10 | 42,0 | 19,8 |
| 4 | 43 | 23,3 | 15,3 |
| 5 | 27 | 28,5 | 38,5 |

Beispiel 8

Eine Mischung aus
1287 g Wasser
20 g Polyvinylpyrrolidon vom K-Wert 90
18 g Phenolsulfonsäure-Formaldehyd-Kondensat
770 g Diisopropylnaphthalin
330 g einer hochsiedenden aliphatischen Kohlenwasserstoffmischung (Sdpkt.: 230-265°C)
48 g einer Mischung aus
 36 g 3,3-Bis-(p-dimethylaminophenyl)-6-dimethylaminophthalid und
 12 g N-Benzoylleukomethylenblau
131 g Methylmethacrylat
56 g Butandioldiacrylat
3,4 g t-Butylperpivalat
wurde analog Beispiel 1 behandelt. Polymerisiert wurde 2 Stunden bei 51°C und anschließend 4 Stunden bei ansteigender Temperatur bis 72°C.

Beispiel 9

Eine Mischung aus
1293 g Wasser
20 g Polyvinylpyrrolidon vom K-Wert 90
27 g Phenolsulfonsäure-Formaldehyd-Kondensat
770 g Diisopropylnaphthalin
330 g einer hochsiedenden aliphatischen Kohlenwasserstoffmischung (Sdpkt.: 230-265°C)
48 g einer Mischung aus
 36 g 3,3-Bis-(p-dimethylaminophenyl)-6-dimethylaminophthalid und
 12 g N-Benzoylleukomethylenblau
131 g Methylmethacrylat
56 g Butandioldiacrylat
1,4 g Azobisisobutyronitril
1 g Dimethyl-2,2-azobisisobutyrat
wurde analog Beispiel 1 behandelt. Polymerisiert wurde 2 Stunden bei 65°C und anschließend 4 Stunden bei ansteigender Temperatur bei 71°C.

Beispiel 10

Eine Mischung aus

1287 g Wasser

20 g Polyvinylpyrrolidon vom K-Wert 90

18 g Phenolsulfonsäure-Formaldehyd-Kondensat

770 g Diisopropylnaphthalin

330 g einer hochsiedenden aliphatischen Kohlenwasserstoffmischung (Sdpkt.: 230-265°C)

48 g einer Mischung aus

    36 g 3,3-Bis-(p-dimethylaminophenyl)-6-dimethylaminophthalid und

    12 g N-Benzoylleukomethylenblau

131 g Methylmethacrylat

56 g Butandioldiacrylat

1,4 g Azobisisobutyronitril

2 g Dimethyl-2,2-azobisisobutyrat

wurde analog Beispiel 1 behandelt. Polymerisiert wurde 2 Stunden bei 60°C und anschließend 4 Stunden bei ansteigender Temperatur bis 75°C.

Beispiel 11

Eine Mischung aus

1287 g Wasser

20 g Polyvinylpyrrolidon vom K-Wert 90

18 g Phenolsulfonsäure-Formaldehyd-Kondensat

1 g Carboxymethylcellulose

770 g Diisopropylnaphthalin

330 g einer hochsiedenden aliphatischen Kohlenwasserstoffmischung (Sdpkt.: 230-265°C)

48 g einer Mischung aus

    36 g 3,3-Bis-(p-dimethylaminophenyl)-6-dimethylaminophthalid und

    12 g N-Benzoylleukomethylenblau

131 g Methylmethacrylat

56 g Butandioldiacrylat

1,4 g Azobisisobutyronitril

2 g Dimethyl-2,2-azobisisobutyrat

wurde analog Beispiel 1 behandelt.

Beispiel 12

Eine Mischung aus

1287 g Wasser

20 g Polyvinylpyrrolidon vom K-Wert 90

18 g Phenolsulfonsäure-Formaldehyd-Kondensat

1,3 g Polyacrylsäure

770 g Diisopropylnaphthalin

330 g einer hochsiedenden aliphatischen Kohlenwasserstoffmischung (Sdpkt.: 230-265°C)

48 g einer Mischung aus

    36 g 3,3-Bis-(p-dimethylaminophenyl)-6-dimethylaminophthalid und

    12 g N-Benzoylleukomethylenblau

131 g Methylmethacrylat

56 g Butandioldiacrylat

1,4 g Azobisisobutyronitril

2 g Dimethyl-2,2-azobisisobutyrat

wurde analog Beispiel 1 behandelt. Polymerisiert wurde 2 Stunden bei 60°C und anschließend 4 Stunden bei 65°C.

Beispiel 13

Eine Mischung aus

1287 g Wasser

20 g Polyvinylpyrrolidon vom K-Wert 90

18 g Phenolsulfonsäure-Formaldehyd-Kondensat

770 g Diisopropylnaphthalin

330 g einer hochsiedenden aliphatischen Kohlenwasserstoffmischung (Sdpkt.: 230-265°C)

48 g einer Mischung aus

    36 g 3,3-Bis-(p-dimethylaminophenyl)-6-dimethylaminophthalid und

    12 g N-Benzoylleukomethylenblau

131 g Methylmethacrylat

56 g Propandiol-1,3-diacrylat

1,4 g Azobisisobutyronitril

2 g Dimethyl-2,2-azobisisobutyrat

wurde analog Beispiel 1 behandelt. Polymerisiert wurde 2 Stunden bei 60°C und anschließend 4 Stunden bei 65°C.

Beispiel 14

    Eine Mischung aus

1287 g Wasser

20 g Polyvinylpyrrolidon vom K-Wert 90

18 g Phenolsulfonsäure-Formaldehyd-Kondensat

770 g Diisopropylnaphthalin

330 g einer hochsiedenden aliphatischen Kohlenwasserstoffmischung (Sdpkt.: 230-265°C)

48 g einer Mischung aus

    36 g 3,3-Bis-(p-dimethylaminophenyl)-6-dimethylaminophthalid und

    12 g N-Benzoylleukomethylenblau

131 g Methylmethacrylat

56 g Hexandioldiacrylat

1,4 g Azobisisobutyronitril

2 g Dimethyl-2,2-azobisisobutyrat

wurde analog Beispiel 1 behandelt. Polymerisiert wurde 2 Stunden bei 60°C und anschließend 4 Stunden bei 65°C.

Beispiel 15

    Eine Mischung aus

1287 g Wasser

20 g Polyvinylpyrrolidon vom K-Wert 90

18 g Phenolsulfonsäure-Formaldehyd-Kondensat

770 g Diisopropylnaphthalin

330 g einer hochsiedenden aliphatischen Kohlenwasserstoffmischung (Sdpkt.: 230-265°C)

48 g einer Mischung aus

    36 g 3,3-Bis-(p-dimethylaminophenyl)-6-dimethylaminophthalid und

    12 g N-Benzoylleukomethylenblau

131 g Methylmethacrylat

56 g Butandioldiacrylat

5,4 g Bis-(3,5,5-trimethylhexanoyl)peroxid

wurde analog Beispiel 1 behandelt. Polymerisiert wurde 2 Stunden bei 52°C und anschließend 4 Stunden bei 59°C.

Beispiel 16

    Eine Mischung aus

1287 g Wasser

20 g Polyvinylpyrrolidon vom K-Wert 90

18 g Phenolsulfonsäure-Formaldehyd-Kondensat

1 g Carboxymethylcellulose

770 g Diisopropylnaphthalin

330 g einer hochsiedenden aliphatischen Kohlenwasserstoffmischung (Sdpkt.: 230-265°C)

48 g einer Mischung aus

36 g 3,3-Bis-(p-dimethylaminophenyl)-6-dimethylaminophthalid und

12 g N-Benzoylleukomethylenblau

131 g Methylmethacrylat

56 g Butandioldiacrylat

1,4 g Azobisisobutyronitril

2 g Dimethyl-2,2-azobisisobutyrat

Alle Einsatzstoffe mit Ausnahme der Monomeren und der Starter wurden 5 Minuten bei Raumtemperatur dispergiert. Anschließend wurden die restlichen Stoffe zugegeben und noch 15 min dispergiert. Polymerisiert wurde 2 Stunden bei 60°C und anschließend 4 Stunden bei 65°C.

Beispiel 17

Eine Mischung aus

128 g Wasser

2 g Polyvinylpyrrolidon vom K-Wert 90

1,8 g Phenolsulfonsäure-Formaldehyd-Kondensat

13,1 g Methylmethacrylat

5,6 g Butandioldiacrylat

88 g Di-(2-ethylhexyl)-phthalat

22 g eines Duftstoffes

0,14 g Azobisisobutyronitril

0,2 g Dimethyl-2,2-azobisisobutyrat

Alle Einsatzstoffe werden 3 Minuten bei Raumtemperatur dispergiert. Polymerisiert wurde 2 Stunden bei 60°C und anschließend 4 Stunden bei 65°C. Die den Duftstoff enthaltenden Mikrokapseln besitzen einen Durchmesser zwischen 2 und 5 μm.

Beispiel 18

Eine Mischung aus

128 g Wasser

2 g Polyvinylpyrrolidon vom K-Wert 90

1,8 g Phenolsulfonsäure-Formaldehyd-Kondensat

13,1 g Methylmethacrylat

5,6 g Butandioldiacrylat

110 g Metolachlor

0,14 g Azobisisobutyronitril

0,2 g Dimethyl-2,2-azobisisobutyrat

Alle Einsatzstoffe werden 3 Minuten bei Raumtemperatur dispergiert. Polymerisiert wurde 2 Stunden bei 60°C und anschließend 4 Stunden bei 65°C. Die das Pflanzenschutzmittel enthaltenden Mikrokapseln besitzen einen Durchmesser zwischen 3 und 8 μm.

Beispiel 19

Eine Mischung aus

128 g Wasser

2 g Polyvinylpyrrolidon vom K-Wert 90

1,8 g Phenolsulfonsäure-Formaldehyd-Kondensat

18,6 g Methylmethacrylat

88 g Blei(II)-2-ethylhexanoat

22 g Weißöl

0,1 g Azobisisobutyronitril

0,2 g Dimethyl-2,2-azobisisobutyrat

Alle Einsatzstoffe werden 5 Minuten bei Raumtemperatur dispergiert. Polymerisiert wurde 2 Stunden bei 60°C und anschließend 4 Stunden bei 65°C. Die das Bleisalz enthaltenden Mikrokapseln besitzen einen Durchmesser zwischen 2 und 6 μm.

Gemäß den Beispielen 8 bis 19 erhält man ebenfalls Mikrokapseln mit Eigenschaften, die denen der Beispiele 1 bis 7 vergleichbar sind.

**Patentansprüche**

**Patentansprüche für folgende Vertragsstaaten : AT, BE, CH, DE, DK, FR, GB, IT, LI, NL, SE**

1. Mikrokapseln, erhältlich durch Polymerisation von
   A) 30 bis 100 Gew.-%, bezogen auf das Gesamtgewicht der Monomeren, eines oder mehrerer $C_1$-$C_{24}$-Alkylester der Acryl- und/oder Methacrylsäure (Monomere I),
   B) 0 bis 80 Gew.-%, bezogen auf das Gesamtgewicht der Monomeren, eines bi- oder polyfunktionellen Monomeren (Monomere II), welches in Lösungsmitteln löslich ist, die in Wasser nicht löslich oder schwerlöslich sind und
   C) 0 bis 40 Gew.-%, bezogen auf das Gesamtgewicht der Monomeren, sonstiger Monomerer (Monomere III),
   wobei das Lösungsmittel gegebenenfalls zusammen mit den Monomeren und einem Radikalstarter als disperse Phase einer stabilen Öl-in-Wasser-Emulsion vorliegt, und wobei die Polymerisation stufenweise durch Erhöhung der Temperatur durch den thermischen Zerfall des Radikalstarters ausgelöst und gesteuert wird.

2. Mikrokapseln nach Anspruch 1, erhältlich durch Polymerisation von
   A) 30 bis 95 Gew.-% der Monomeren I,
   B) 5 bis 40 Gew.-% der Monomeren II und
   C) 0 bis 30 Gew.-% sonstiger Monomerer III.

3. Mikrokapseln nach Anspruch 1, in welchen das in Wasser nicht lösliche oder schwerlösliche Lösungsmittel einen Siedepunkt im Bereich von 150 bis 350°C hat.

4. Mikrokapseln nach Anspruch 1, in welchen das in Wasser nicht lösliche oder schwerlösliche Lösungsmittel Diisopropylnaphthalin und/oder Dodecylbenzol ist.

5. Verfahren zur Herstellung von Mikrokapseln gemäß Anspruch 1, dadurch gekennzeichnet, daß man ein in Wasser nicht- oder schwerlösliches Lösungsmittel, gegebenenfalls zusammen mit, jeweils bezogen auf das Gesamtgewicht, der Monomeren,
   A) 30 bis 100 Gew.-% eines oder mehrerer $C_1$-$C_{24}$-Alkylester der Acryl- und/oder Methacrylsäure (Monomere I),
   B) 0 bis 80 Gew.-% eines bi- oder polyfunktionellen Monomeren (Monomere II), welches in den Lösungsmitteln löslich ist, und
   C) 0 bis 40 Gew.-% sonstiger Monomerer (Monomere III) und
   einem Radikalstarter in Wasser in an sich bekannter Weise in eine stabile öl-in-Wasser-Emulsion überführt, danach durch den thermischen Zerfall von Radikalstartern die stufenweise Polymerisation der Monomeren auslöst und steuert, wobei sich Kapseln aus Schale und Kern bilden.

6. Farbbildner enthaltende Mikrokapseln gemäß Anspruch 1.

7. Verwendung der Farbbildner enthaltenden Mikrokapseln gemäß Anspruch 6 zur Herstellung von druckempfindlichen Aufzeichnungsmaterialien.

8. Druckempfindliche Aufzeichnungsmaterialien, enthaltend Mikrokapseln gemäß Anspruch 6 und eine weitere Komponente zur Entwicklung des Farbstoffes.

**Patentansprüche für folgenden Vertragsstaat : ES**

1. Verfahren zur Herstellung von Mikrokapseln, dadurch gekennzeichnet, daß man ein in Wasser nicht- oder schwerlösliches Lösungsmittel, gegebenenfalls zusammen mit, jeweils bezogen auf das Gesamtgewicht der Monomeren,
   A) 30 bis 100 Gew.-% eines oder mehrerer $C_1$-$C_{24}$-Alkylester der Acryl- und/oder Methacrylsäure (Monomere I),
   B) 0 bis 80 Gew.-% eines bi- oder polyfunktionellen Monomeren (Monomere II), welches in den Lösungsmitteln löslich ist, und
C) 0 bis 40 Gew.-% sonstiger Monomerer (Monomere III) und
einem Radikalstarter in Wasser in an sich bekannter Weise in eine stabile Öl-in-Wasser-Emulsion überführt, danach durch den thermischen Zerfall von Radikalstartern die stufenweise Polymerisation der Monomeren auslöst und steuert, wobei sich Kapseln aus Schale und Kern bilden.

2. Verfahren nach Anspruch 1, dadurch gekennzeichnet, daß man von
A) 30 bis 95 Gew.-% der Monomeren I,
B) 5 bis 40 Gew.-% der Monomeren II und
C) 0 bis 30 Gew.-% sonstiger Monomerer III ausgeht.

3. Verfahren nach Anspruch 1, wobei das in Wasser nicht lösliche oder schwerlösliche Lösungsmittel einen Siedepunkt im Bereich von 150 bis 350°C hat.

4. Verfahren nach Anspruch 1, wobei das in Wasser nicht lösliche oder schwerlösliche Lösungsmittel Diisopropylnaphthalin und/oder Dodecylbenzol ist.

5. Verfahren nach Anspruch 1, dadurch gekennzeichnet, daß man Farbbildner enthaltende Mikrokapseln herstellt.

## Claims

### Claims for the following Contracting States : AT, BE, CH, DE, DK, FR, GB, IT, LI, NL, SE

1. Microcapsules obtainable by polymerizing
A) 30-100 % by weight, based on the total weight of monomer, of one or more $C_1$-$C_{24}$-alkyl esters of acrylic and/or methacrylic acid (monomer I),
B) 0-80 % by weight, based on the total weight of monomer, of a bi- or polyfunctional monomer (monomer II) which is soluble in a solvent which is insoluble or only sparingly soluble in water, and
C) 0-40 % by weight, based on the total weight of monomer, of other monomers (monomer III),
for which the solvent, with or without the monomers and a free radical initiator, forms the disperse phase of a stable oil-in-water emulsion and the polymerization is initiated and controlled stepwise through the thermal decomposition of the free radical initiator by raising the temperature.

2. Microcapsules as claimed in claim 1, obtainable by polymerizing
A) 30-95 % by weight of monomer I,
B) 5-40 % by weight of monomer II, and
C) 0-30 % by weight of monomer III.

3. Microcapsules as claimed in claim 1, in which the water-insoluble or only sparingly water-soluble solvent has a boiling point within the range from 150 to 350°C.

4. Microcapsules as claimed in claim 1, in which the water-insoluble or only sparingly water-soluble solvent is diisopropylnaphthalene and/or dodecylbenzene.

5. A process for preparing microcapsules as claimed in claim 1, which comprises converting a water-insoluble or only sparingly water-soluble solvent optionally together with, in each case based on the total weight of monomer,
A) 30-100 % by weight of one or more $C_1$-$C_{24}$-alkyl esters of acrylic and/or methacrylic acid (monomer I),
B) 0-80 % by weight of a bi- or polyfunctional monomer (monomer II) which is soluble in the solvents, and
C) 0-40 % by weight of other monomers (monomer III), and
a free radical initiator in water into a stable oil-in-water emulsion in a conventional manner, and then, through the thermal decomposition of free radical initiators, initiating and controlling the stepwise polymerization of the monomers to form capsules composed of shell and core.

6. Microcapsules as claimed in claim 1 which contain a color former.

7. The use of the color former microcapsules of claim 6 for producing a pressure-sensitive recording material.

8. A pressure-sensitive recording material containing microcapsules as claimed in claim 6 and a further component for developing the dye.

**Claims for the following Contracting State : ES**

1. A process for preparing microcapsules, which comprises converting a water-insoluble or only sparingly water-soluble solvent optionally together with, in each case based on the total weight of monomer,
   A) 30-100 % by weight of one or more $C_1$-$C_{24}$-alkyl esters of acrylic and/or methacrylic acid (monomer I),
   B) 0-80 % by weight of a bi- or polyfunctional monomer (monomer II) which is soluble in the solvents, and
   C) 0-40 % by weight of other monomers (monomer III), and
   a free radical initiator in water into a stable oil-in-water emulsion in a conventional manner, and then, through the thermal decomposition of free radical initiators, initiating and controlling the stepwise polymerization of the monomers to form capsules composed of shell and core.

2. A process as claimed in claim 1, wherein the monomer composition is
   A) 30-95 % by weight of monomer I,
   B) 5-40 % by weight of monomer II, and
   C) 0-30 % by weight of monomer III.

3. A process as claimed in claim 1, wherein the water-insoluble or only sparingly water-soluble solvent has a boiling point within the range from 150 to 350°C.

4. A process as claimed in claim 1, wherein the water-insoluble or only sparingly water-soluble solvent is diisopropylnaphthalene and/or dodecylbenzene.

5. A process as claimed in claim 1, wherein the microcapsules prepared contain a color former.

**Revendications**

**Revendications pour les Etats contractants suivants : AT, BE, CH, DE, DK, FR, GB, IT, LI, NL, SE**

1. Microcapsules que l'on peut obtenir par la polymérisation de
   A) 30 à 100% en poids, par rapport au poids total des monomères, d'un ou plusieurs esters alkyliques en $C_1$ à $C_{24}$ de l'acide acrylique et/ou de l'acide méthacrylique (monomères I)
   B) 0 à 80% en poids, par rapport au poids total des monomères, d'un monomère bifonctionnel ou polyfonctionnel (monomères II), qui est soluble dans des solvants qui ne sont pas solubles ou difficilement solubles dans l'eau et
   C) 0 à 40% en poids, par rapport au poids total des monomères, d'autres monomères (monomères III), où le solvant, éventuellement ensemble avec les monomères et un amorceur de radicaux, se présente sous forme de la phase dispersée d'une émulsion huile-dans-eau stable et où la polymérisation est déclenchée et dirigée de manière échelonnée par l'élévation de la température par la décomposition thermique de l'amorceur de radicaux.

2. Microcapsules suivant la revendication 1, que l'on peut obtenir par la polymérisation de
   A) 30 à 95% en poids des monomères I,
   B) 5 à 40% en poids des monomères II et
   C) 0 à 30% en poids d'autres monomères III.

3. Microcapsules suivant la revendication 1, dans lesquelles les solvants insolubles ou difficilement solubles dans l'eau possèdent un point d'ébullition qui varie de 150 à 350°C.

4. Microcapsules suivant la revendication 1, dans lesquelles les solvants insolubles ou difficilement solubles dans l'eau sont le diisopropylnaphtalène et/ou le dodécylbenzène.

5.  Procédé de préparation de microcapsules suivant la revendication 1, caractérisé en ce que l'on convertit un solvant insoluble ou difficilement soluble dans l' eau, éventuellement ensemble avec, à chaque fois rapportés au poids total des monomères,

A) 30 à 100% en poids d'un ou plusieurs esters alkyliques en $C_1$ à $C_{24}$ de l'acide acrylique et/ou de l'acide méthacrylique (monomères I),

B) 0 à 80% en poids d'un monomère bifonctionnel ou polyfonctionnel (monomères II) qui est soluble dans les solvants et

C) 0 à 40% en poids d'autres monomères (monomères III) et

un amorceur de radicaux, dans l'eau, de manière en soi connue, en une émulsion huile-dans-eau stable, puis on déclenche et dirige de manière échelonnée la polymérisation des monomères, si bien que se forment des capsules à partir de l'enveloppe et du noyau.

6.  Microcapsules contenant des substances chromogènes suivant la revendication 1.

7.  Utilisation de microcapsules contenant des substances chromogènes suivant la revendication 6 pour la fabrication de matériaux d'enregistrement sensibles à la pression.

8.  Matériaux d'enregistrement sensibles à la pression, qui contiennent des microcapsules suivant la revendication 6 et d'autres composants destinés au développement du colorant.

**Revendications pour l'Etat contractant suivant : ES**

1.  Procédé de préparation de microcapsules caractérisé en ce que l'on convertit un solvant insoluble ou difficilement soluble dans l'eau, éventuellement ensemble avec, à chaque fois rapportés au poids total des monomères,

A) 30 à 100% en poids d'un ou plusieurs esters alkyliques en $C_1$ à $C_{24}$ de l'acide acrylique et/ou de l'acide méthacrylique (monomères I),

B) 0 à 80% en poids d'un monomère bifonctionnel ou polyfonctionnel (monomères II) qui est soluble dans les solvants et

C) 0 à 40% en poids d'autres monomères (monomères III) et

un amorceur de radicaux, dans l'eau, de manière en soi connue, en une émulsion huile-dans-eau stable, puis on déclenche et dirige de manière échelonnée la polymérisation des monomères, si bien que se forment des capsules à partir de l'enveloppe et du noyau.

2.  Procédé de suivant la revendication 1, caractérisé en ce que l'on part de

A) 30 à 95% en poids des monomères I,

B) 5 à 40% en poids des monomères II et

C) 0 à 30% en poids d'autres monomères III.

3.  Procédé suivant la revendication 1, caractérisé en ce que les solvants insolubles ou difficilement solubles dans l'eau possèdent un point d'ébullition qui varie de 150 à 350°C.

4.  Procédé suivant la revendication 1, caractérisé en ce que les solvants insolubles ou difficilement solubles dans l'eau sont le diisopropylnaphtalène et/ou le dodécylbenzène.

5.  Procédé suivant la revendication 1, caractérisé en ce que l'on prépare des microcapsules contenant des substances chromogènes.